(19) Europäisches Patentamt

European Patent Office

Office européen des brevets

(11) **EP 1 726 575 A1**

(12) **EUROPEAN PATENT APPLICATION**

(43) Date of publication:
**29.11.2006 Bulletin 2006/48**

(51) Int Cl.:
*C04B 11/028* (2006.01)    *B01J 8/26* (2006.01)

(21) Application number: **05104577.1**

(22) Date of filing: **27.05.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **PROMAT INTERNATIONAL N.V.**
**2830 Tisselt (BE)**

(72) Inventors:
• **Opsommer, Ann**
  **1880 Koningslo (BE)**
• **Heijster, Ivo**
  **2950 Kapellen (BE)**

(74) Representative: **Van Straaten, Joop et al**
**OFFICE KIRKPATRICK S.A.,**
**Avenue Wolfers, 32**
**1310 La Hulpe (BE)**

(54) **Method for plaster production and plaster product obtained by said method.**

(57)    A method for plaster production, including fluidising and vaporizing surface water of moist calcium sulphate dihydrate (1) by means of a heat-transfer gas (3); fluidising and withdrawing water of crystallization from the surface-dried calcium sulphate dihydrate (9) so-obtained, by means of a heat-transfer gas (5) to form a product containing calcium sulphate hemihydrate; and fluidising and cooling said product (12) by means of a heat transfer gas (11), with vibration system (2) and dust recycling system.

Fig. 1

**Description**

**Field of the invention**

The invention relates to a method for plaster production based on fluidised bed calcination of moist gypsum.
It relates more specifically to a method for plaster production, including

- in a first fluidised bed fluidising moist calcium sulphate dihydrate by means of a heat-transfer and vaporising surface water of said calcium sulphate dihydrate in said first fluidised bed equipment to form a substantially surface-dried calcium sulphate dihydrate;
- in a second fluidised bed conveying said substantially surface-dried calcium sulphate dihydrate from said first fluidised bed equipment into a second fluidised bed equipment, fluidising said substantially surface-dried calcium sulphate dihydrate in said second fluidised bed equipment by means of a heat-transfer gas and withdrawing water of crystallisation from said substantially surface-dried calcium sulphate dihydrate in said second fluidised bed equipment to form a product comprising calcium sulphate hemihydrate; and
- in a third fluidised bed, fluidising said product by means of a heat transfer gas and simultaneously cooling said product.

**Background of the invention**

Plaster (a product containing mainly calcium sulphate hemihydrate, or HH) is normally obtained by calcination of gypsum (a material containing mainly calcium sulphate dihydrate, or DH).
Plaster production using the fluidised bed technology is a known process. The basic model has been disclosed by GB-613 207, in which gypsum is dehydrated using a horizontal fluidised bed apparatus. The gas used for maintaining gypsum in fluid state is introduced into the bed through a perforated or porous plate or through granular material. The method described in the GB-613 207 is one in which the fluidised bed technology is used only for calcining, not for drying or cooling of gypsum and plaster. Nothing has been revealed on the optimisation and control of the phase composition.
In US-5 437 850, there is disclosed a method to produce plaster with two fluidised beds, wherein moist gypsum is first dried in a first fluidised bed equipment to remove moisture, the so-obtained dried gypsum is then dehydrated and cooled in a second fluidised bed equipment to form calcium sulphate hemihydrate.
In order to optimise the fluidisation of the moist gypsum in the first fluidised bed equipment, part of the dried material is recycled and fed back to the first fluidised bed equipment. This will affect on productivity of the method, and will disturb particle size distribution of the calcined product.
Another disadvantage of the method of US-5 437 850 is the prohibited cost of the equipment.

**Summary of the invention**

This invention is related to a method for plaster production by calcination of gypsum with the fluidised bed technology, which allows the production of plaster having a narrow particle size distribution. The method also allows the production of plaster having a high hemihydrate content, preferably above ca 90 wt% (percent by weight).
It is an object of the invention to overcome the disadvantages of the prior art as disclosed hereabove.
Another object of the invention is to provide a method to produce plaster with improved quality allowing the manufacture of finished gypsum based products having good mechanical properties, particularly a high mechanical strength and fracture toughness.
A further object of the invention is to provide a method, which allows the use of an industrial equipment that is less expensive than those used in the methods of the prior art.
In accordance with the present invention, the method of plaster production is characterised in that said vaporising in the first step, said withdrawing of water of crystallisation in the second step, and said cooling in the third step are each achieved essentially by direct heat-transfer between said heat transfer gas and respectively said calcium sulphate dihydrate, said calcium sulphate hemihydrate and said product.
In the method according to the present invention, plaster is a product having hydraulic binder properties, containing substantially calcium sulphate hemihydrate. In addition, small amount of calcium sulphate dihydrate and/or anhydrite might be present, but only in limited amount.
Gypsum is a material, either a natural gypsum or a by-product from an industrial process such as flue-gas desulphurisation (FGD), containing substantially calcium sulphate dihydrate. Small amount of impurities may be present, but usually in very limited amount.
In accordance with this invention, a suitable plaster to produce a finished gypsum based product with good mechanical properties should have a narrow particle size distribution. It should also have a hemihydrate content above 90 wt%. A plaster with these characteristics will form on hydration a matrix constituted by small interlocking needle-like gypsum-crystals, with no agglomeration of small crystals into bundles of crystals. Accordingly, it requires following characteristics with respect to raw material and production technology:

- a starting gypsum material with a narrow particle size distribution, and a manufacturing method which can avoid agglomeration and/or break down lumps of moist gypsum;
- a technology to produce plaster with high content of calcium sulphate hemihydrate (HH);
- a low content of calcium sulphate dihydrate (DH) in the plaster product;
- a low content of anhydrite phases(AIII and AII) in the calcined product; the AIII generally favours the formation of bundles of gypsum crystals during hydration, leading to bad mechanical properties of the finished gypsum based product.

In accordance with the invention, such required plaster can be produced by an apparatus including three separate fluidised bed equipments, i.e.:

- a first fluidised bed equipment (A) in which moist gypsum is fluidised by means of a heat-transfer gas , vibrated and heated to remove progressively the surface water and form substantially dried calcium sulphate dihydrate;
- a second fluidised bed equipment (B) which follows the first equipment (A), in which the dried calcium sulphate dihydrate from the first bed equipment (A) is fluidised by means of a heat-transfer gas and heated to dehydrate the water of crystallisation, and transformed into calcium sulphate hemihydrate;
- a third fluidised bed equipment (C) which follows the second equipment (B), in which the calcium sulphate hemihydrate from the second bed equipment (B) is fluidised by means of a heat-transfer gas and cooled rapidly to an appropriate temperature to avoid any substantial further transformation of the calcium sulphate hemihydrate into anhydrite.

The operating conditions in the first fluidised bed (A), particularly the temperature, have to be adapted to promote a vaporization of the surface water of the particles of gypsum, without any substantial elimination of the water of crystallization of the calcium sulphate dihydrate.

The operating conditions in the second fluidised bed (B) have to be adapted to promote the dehydration of the calcium sulphate dihydrate and form a product which contains mainly calcium sulphate hemihydrate. Care must be taken to avoid any residual calcium sulphate dihydrate and any substantial formation of anhydrite in this second fluidised bed equipment (B).

It is accordingly a first feature of the invention that the heating of the moist calcium sulphate dihydrate in the first fluidised bed equipment (A) is achieved essentially by direct heat transfer between the material (the moist calcium sulphate dihydrate) and the heat-transfer gas, without using a heat exchanger. Preferred product temperature is up to ca 90°C .

Similarly, the heating of the dried calcium sulphate dihydrate in the second fluidised bed equipment (B) is achieved essentially by direct heat transfer between the material (the dried calcium sulphate dihydrate) and the heat-transfer gas, without using a heat exchanger. A hot gas temperature of from ca 400 to 500 °C is recommended in the second fluidised bed (B).

It is accordingly a second feature of the invention to achieve a specific dust recycling in the second fluidised bed (B) to prevent formation of the anhydrite (AIII). The dust of the fluidised bed (B) is removed from exhaust gas, at least a portion of the said dust is recycled into said second fluidised bed (B) and/or into said third fluidised bed (C), whereby the fraction of recycled dust is regulated depending on an analysis of the phase composition of said dust. In this embodiment, the whole quantity of the dust may be recycled into the second fluidised bed (B) or into the third fluidised bed (C). Alternatively a fraction of said dust is recycled in the second fluidised bed (B) and another fraction is recycled in the third fluidised bed (C). The amount of the dust which has to be recycled into the fluidised beds (B) or (C) is determined by an analysis of the phase composition of the dust, namely its respective amounts of calcium sulphate hemihydrate, of calcium sulphate dihydrate (if any) and of anhydrite-AIII (if any).

In accordance with the present invention, the second fluidised bed equipment (B) is provided with a movable screw system, having an adjustable aspiration capacity and a way adapted to feed back the dust in different zones of the second fluidised bed (B) and/or in the third fluidised bed (C), depending on its mineral phase composition. Such a de-dusting system enables to avoid over-burning of the smallest gypsum particles, which are sensitive to the formation of anhydrite-AIII. In one embodiment of the invention, the calcined product leaving the second fluidised bed (B) is at a product temperature of up to ca 150 °C, and the fine dust leaving the de-dusting system of fluidised bed (B) is at a product temperature of from ca 130 to 140 °C.

This method avoids the expensive techniques of the prior art such as indirect heating or controlling the partial vapour pressure.

Attention should be paid to the third fluidised bed equipment (C) when cooling the aforesaid product coming from the second fluidised bed equipment (B), in order to avoid substantial further transformation of calcium sulphate hemihydrate into anhydrite.

It is accordingly a third feature of the invention to achieve a quick cooling of this product in this third fluidised bed equipment (C), this cooling being made essentially by direct heat transfer between the product and the fluidising gas.

In accordance with this invention, a rapidly controlled cooling is applied in the fluidised bed (C) in order to bring down the temperature to, preferably, less than ca 50 °C.

In another preferred embodiment according to the invention, the cooling of the product in the third fluidised bed equipment (C) is performed in a time controlled to prevent any further transformation of calcium sulphate hemihydrate into anhydrite in said third fluidised bed equipment (C), more preferably in a time controlled to obtain a plaster containing at least 90 wt% of calcium sulphate hemihydrate. In this embodiment of the invention, this time is preferably less than ca 15 minutes, advantageously from ca 5 to ca 10 minutes.

In a further particular embodiment according to the invention, dust is removed from exhaust gas from the first fluidised bed equipment (A) and at least a portion of said dust is recycled into the second fluidised bed equipment (B), while avoiding recycling into said first fluidised bed equipment (A). Avoiding recycling dust in the first fluidised bed (A) helps maintaining a narrow particle size distribution.

An additional and preferred embodiment of the invention includes vibrating the first fluidised bed (A). In this embodiment of the invention, the vibrations are effective to break down lumps in the fluidised bed (A), contributing to and maintaining a narrow particle size distribution of the dried gypsum. Both amplitude and/or frequency of the vibration are optimised to achieve this objective.

The method according to the invention allows the manufacture of a plaster having a narrow particle size distribution. It also allows the production of plaster having at least ca 90 wt% ,preferably, from ca 91 to ca 94 wt%, of calcium sulphate hemihydrate. It is substantially free from AIII phase anhydrite. Small amount of calcium sulphate dihydrate may be present, in an amount less than ca 5 wt%, and preferably, less than ca 3 wt%. This plaster forms on hydration a matrix composed of small interlocking needle-like gypsum-crystals that enable the formation of products with good mechanical properties.

**Brief description of the drawing**

Details and features of the present invention will become apparent to those skilled in the art according to following embodiment of the present invention. We will refer to figure 1 to figures 3. On figure 2 and 3, left and right axis represent the differential volume (vol %) and the cumulative volume (vol %)respectively .

**Description of a preferred embodiment**

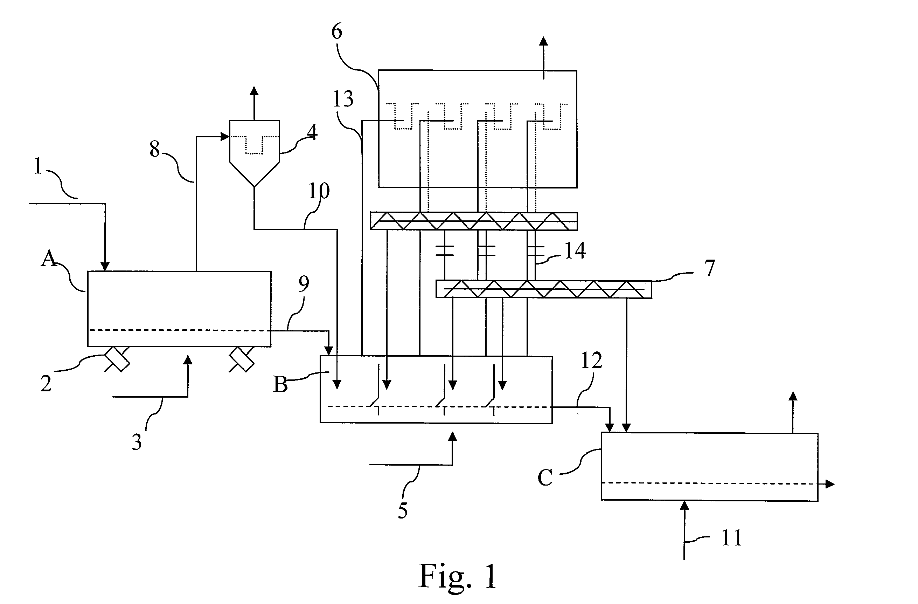

In figure 1, moist gypsum 1 is fed via a conveyor into the fluidised bed equipment (A) (dryer) which is supplied with fluidising air 3. The dryer (A) is provided with a vibrating system 2 adapted to break down wet lumps and keep a narrow particle size distribution of the material treated in the fluidised bed. Exhaust gas 8 from fluidised bed (A) is de-dusted in a filter 4 and the so-recovered dust 10 is sent into the second fluidised bed equipment (B) (calciner) together with the dried gypsum material 9 from fluidised bed equipment (A). This second fluidised bed equipment (B) is supplied with fluidising air 5. Exhaust gas 13 from the fluidised bed (B) is de-dusted in a filter 6 and the dust particles (14) so obtained are fed back into the fluidised bed (B) and/or directly into the fluidised bed (C), using a movable screw system 7, according to the phase composition of the product. The fluidising air 3 and 5 of the fluidised beds (A) and (B) is direct heated by heaters (not shown) to such a temperature that is adjustable according to the temperature at the end of the fluidised beds (A) and (B), and phase composition of the calcined product. The calcined product 12 from the calciner (B) and the dust 14 from the feeding system 7 are rapidly cooled in the fluidised bed (C) to prevent any formation of anhydrite III and to homogenise the final product (dust and main stream), before sending to silos for storage, ready for manufacture of plaster based products. The cooling of the calcined product in the fluidised bed (C) is achieved through direct heat transfer to the fluidising air 11 of the fluidised bed (C).

**Examples**

The following examples show advantageous effect of the present invention, with true scope defined by the claims.

**Example 1 (invention) and example 2 (reference)**

The example 1 and example 2 show the effect of a rapid cooling in the third fluidised bed (C) on the properties of the calcined plaster. In these examples, moist gypsum has been dehydrated in the first and second fluidised bed equipment (A) and (B) in conditions complying with the method according to the invention. After (B), only the cooling of the calcined plaster is different.

In example 1 (invention), the product from the second bed (B) has been cooled rapidly with air in a fluidised bed equipment (C).

In example 2 (reference), the product from the second bed (B) has been cooled slowly transferring the calcined product immediately in a silo.

Table I shows the amount of anhydrite (AIII), calcium sulphate hemihydrate (HH), and calcium sulphate dihydrate (DH) of the calcined products. It demonstrates that the method of the invention produces the HH content of 92,5wt%, while slow cooling yields the HH content of only 85 wt%.

TABLE I.

| Example No. | AIII (wt %) | HH (wt %) | DH (wt %) |
|---|---|---|---|
| 1 | 2 | 92,5 | 1 |
| 2 | 9 | 85 | 1 |

### Examples 3-4 (reference) and examples 5-6 (invention)

Example 3, 4, 5 and 6 demonstrate the effect of recycling dust in the fluidised beds (A) and (B) on the phase composition of the calcined plaster obtained at the exit of the third fluidised bed (C).

In these examples, moist gypsum has been dried and dehydrated in the first and second fluidised bed equipment (A) and (B). The product obtained at the exit of the fluidised bed (B) is cooled rapidly in the third fluidised bed (C), according to the invention. In the example 3 and 4, only 5 wt% of dust is removed from the fluidised beds (A) and (B); while in the example 5 and 6, as much as 25 wt% of dust is removed from the fluidised beds (A) and (B).

Table II shows the phase composition of the product in terms of anhydrite (AIII), calcium sulphate hemihydrate (HH), calcium sulphate dihydrate (DH). It is evident that the example 5 and 6 are advantageous in terms of producing a plaster with HH content above 90 wt%.

TABLE II.

| Example No. | Dust removed (wt %) | Main stream particles (wt %) | AIII (wt %) | HH (wt %) | DH (wt %) |
|---|---|---|---|---|---|
| 3 | 5 | 95 | 33,2 | 60,6 | 0,4 |
| 4 | 5 | 95 | 40,2 | 53,3 | 0,6 |
| 5 | 25 | 75 | 0 | 93,1 | 0,9 |
| 6 | 25 | 75 | 0 | 91,4 | 2,6 |

### Examples 7 (reference) - 8 (invention)

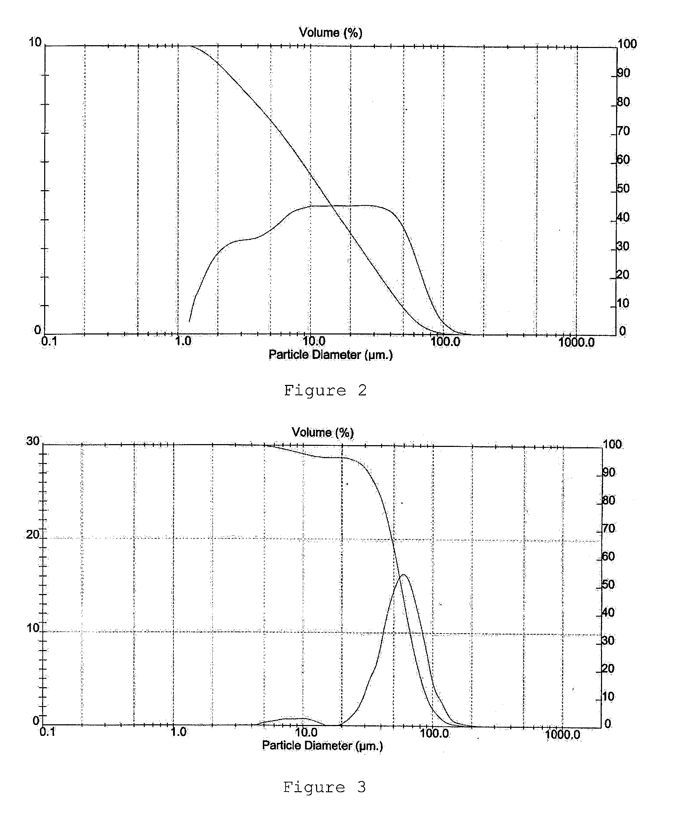

In general the plasters used as binders have a quite large particle size distribution. Figure 2 shows an example of such a distribution, as measured by laser diffraction. Such a wider distribution is characterised by higher values for the relative span. The span is a dimensionless measure of the 'spread' of a particle size distribution, defined by Relative Span:

$$\text{Relative Span} = \frac{D[v,0.9] - D[v,0.1]}{D[v,0.5]}$$

With:

- D[v,0.9] refers to a value such that 90% of the particle size distribution is made of smaller sizes (with the remaining 10% in larger sizes).
- D[v,0.1] refers to a value such that 10% of the particle size distribution is made of smaller sizes (with the remaining 90% in larger sizes).
- D[v,0.5] means that 50% of the volume is composed of larger particles and 50% of smaller ones.

The lower the value of the relative span, the narrower the size distribution.

The wider distribution shown in the figure 2 has a span-value of 3,80. Plasters with such a particle size distribution lead to hydrated products with larger gypsum crystals and therefore result in less good mechanical properties for the finished product.

The plaster of the invention has a narrower particle size distribution, characterised by lower span-values (preferentially below ca 3,0). An example of such a plaster, having a distribution with a span-value of 1,02 is given in figure 3. These more narrow particle size distribution results in a high nucleation rate during the gypsum-crystallisation and therefore results in a structure composed of smaller gypsum crystals and products with better mechanical properties.

**Claims**

1. A method for plaster production, including

   - in a first fluidised bed fluidising moist calcium sulphate dihydrate by means of a heat-transfer gas into a first fluidised bed equipment and vaporising surface water of said calcium sulphate dihydrate in said first fluidised bed equipment to form a substantially surface-dried calcium sulphate dihydrate;
   - in a second fluidised bed conveying said substantially surface-dried calcium sulphate dihydrate from said first fluidised bed equipment into a second fluidised bed equipment, fluidising said substantially surface-dried calcium sulphate dihydrate in said second fluidised bed equipment by means of a heat-transfer gas and withdrawing water of crystallisation from said substantially surface-dried calcium sulphate dihydrate in said second fluidised bed equipment to form a product comprising calcium sulphate hemihydrate; and
   - in a third fluidised bed, fluidising said product by means of a heat transfer gas and simultaneously cooling said product,

   **characterised in that** said vaporising in said first fluidised bed (A), said withdrawing of water of crystallisation in said second fluidised bed (B) and said cooling in said third fluidised bed (C) are each achieved essentially by direct heat-transfer between said heat transfer gases (3, 5, 11) and respectively said calcium sulphate dihydrate (1), said calcium sulphate hemihydrate (9) and said product (12).

2. Method according to claim 1, **characterised in that** said cooling of the product (12) in said third fluidised bed (C) is controlled in order to have the temperature of said product going down to a temperature of at most equal to ca 50°C.

3. Method according to any one of claims 1 to 2,
   **characterised in that** said cooling of said product (12) in said third fluidised bed (C) is achieved in a time controlled to prevent any substantial transformation of calcium sulphate hemihydrate into anhydrite in said third fluidised bed.

4. Method according to any one of claims 1 to 3,
   **characterised in** achieving said cooling in a time controlled to obtain a plaster containing at least 90 weight% of calcium sulphate hemihydrate.

5. Method according to any one of claims 1 to 4,
   **characterised in that** said cooling of said product (12) in said third fluidised bed (C) is controlled to have said time less than ca 15 minutes.

6. Method according to any one of claims 1 to 5,
   **characterised by** removing dust (14) from exhaust gas (13) from said second fluidised bed equipment (B), and recycling at least a portion of said dust (14) of said second fluidised bed (B) into said second fluidised bed (B) and/or into said third fluidised bed (C), whereby the fraction of recycled dust is regulated depending on an analysis of the phase composition of said dust (14).

7. Method according to any one of claims 1 to 6,
   **characterised by** removing dust (10) from exhaust gas (8) from said first fluidised bed equipment (A) and recycling at least a portion of said dust into said second fluidised bed equipment (B), while avoiding any substantial recycling of said dust into said first fluidised bed equipment (A).

8. Method according to any one of claims 1 to 7,
   **characterised by** vibrating (2) the said first fluidised bed (A).

9.  Method according to any one of claims 1 to 8,
    **characterised by** a product temperature of up to ca 90 °C in said first fluidised bed equipment (A) and a product temperature of up to ca 150 °C in said second fluidised bed equipment (B).

10. Plaster product obtained by a method according to any one of claims 1 to 9, **characterised in that** it comprises at least ca 90 weight% of calcium sulphate hemihydrate.

11. Plaster product obtained by a method according to any one of claims 1 to 9, has a narrow particle size distribution with a relative span of below ca 3.0.

12. Plaster product obtained by a method according to any one of claims 1 to 9, **characterised in that** it comprises less than ca 5 weight% of calcium sulphate dihydrate.

13. Plaster product obtained by a method according to any one of claims 1 to 9, **characterised in that** it is substantially free from AIII phase anhydrite.

14. Plaster product obtained by a method according to any one of claims 1 to 9, **characterised in that** it comprises from ca 91 to ca 94 weight% of calcium sulphate hemihydrate.

EP 1 726 575 A1

Fig. 1

Volume (%)

Figure 2

Volume (%)

Figure 3

European Patent
Office

**EUROPEAN SEARCH REPORT**

Application Number

EP 05 10 4577

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2 715 282 A (JR. WILLIAM W. NIVEN,) 16 August 1955 (1955-08-16) * the whole document * | 1,3-5 | C04B11/028 B01J8/26 |
| Y | | 2,6-9 | |
| X,D | GB 613 207 A (MICHAEL HENRY MILLER ARNOLD; RICHARD JOHN YOUNG; IMPERIAL CHEMICAL IND) 23 November 1948 (1948-11-23) * the whole document * | 10,11, 13,14 | |
| X,D | US 5 437 850 A (KROEHL ET AL) 1 August 1995 (1995-08-01) * the whole document * | 10,12-14 | |
| Y | | 2,6,7,9 | |
| X | US 4 247 518 A (CHARLET ET AL) 27 January 1981 (1981-01-27) * the whole document * | 12 | |
| Y | US 4 974 334 A (RODDEWIG ET AL) 4 December 1990 (1990-12-04) * the whole document * | 8 | TECHNICAL FIELDS SEARCHED (IPC) |
| A | WO 97/30004 A (CT-UMWELTTECHNIK GMBH; LANGFELDT, CLAUDIA; KROEHL, PAUL, BERNHARD) 21 August 1997 (1997-08-21) * the whole document * | | C04B B01J |
| A | US 2 485 317 A (ROETHELI BRUNO E) 18 October 1949 (1949-10-18) * the whole document * | 1 | |

The present search report has been drawn up for all claims

| Place of search | Date of completion of the search | Examiner |
|---|---|---|
| Munich | 27 December 2005 | Gattinger, I |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

.........................................................................
& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 05 10 4577

This annex lists the patent family members relating to the patent documents cited in the above-mentioned European search report.
The members are as contained in the European Patent Office EDP file on
The European Patent Office is in no way liable for these particulars which are merely given for the purpose of information.

27-12-2005

| Patent document cited in search report | | Publication date | Patent family member(s) | | Publication date |
|---|---|---|---|---|---|
| US 2715282 | A | 16-08-1955 | NONE | | |
| GB 613207 | A | 23-11-1948 | NONE | | |
| US 5437850 | A | 01-08-1995 | NONE | | |
| US 4247518 | A | 27-01-1981 | BR | 7603245 A | 25-01-1977 |
| | | | DE | 2622994 A1 | 09-12-1976 |
| | | | FR | 2311764 A1 | 17-12-1976 |
| | | | GB | 1549029 A | 01-08-1979 |
| | | | GB | 1549030 A | 01-08-1979 |
| | | | GR | 58250 A1 | 31-08-1977 |
| | | | IT | 1061560 B | 30-04-1983 |
| | | | JP | 981289 C | 27-12-1979 |
| | | | JP | 52000795 A | 06-01-1977 |
| | | | JP | 54013437 B | 30-05-1979 |
| | | | MX | 3470 E | 09-12-1980 |
| | | | TR | 19196 A | 01-06-1978 |
| | | | ZA | 7603014 A | 27-04-1977 |
| US 4974334 | A | 04-12-1990 | DE | 3542904 A1 | 11-06-1987 |
| | | | WO | 8703508 A1 | 18-06-1987 |
| | | | EP | 0286636 A1 | 19-10-1988 |
| | | | FI | 882647 A | 03-06-1988 |
| WO 9730004 | A | 21-08-1997 | CZ | 9802631 A3 | 16-12-1998 |
| | | | DE | 19606075 A1 | 21-08-1997 |
| | | | EP | 0881996 A1 | 09-12-1998 |
| | | | HU | 9900997 A2 | 28-07-1999 |
| | | | PL | 328347 A1 | 18-01-1999 |
| | | | US | 6054101 A | 25-04-2000 |
| US 2485317 | A | 18-10-1949 | NONE | | |

EPO FORM P0459

For more details about this annex : see Official Journal of the European Patent Office, No. 12/82

## REFERENCES CITED IN THE DESCRIPTION

**Patent documents cited in the description**

- GB 613207 A
- US 5437850 A